# DEMANDE DE BREVET EUROPEEN

(11) **EP 1 862 993 A1**
(43) Date de publication de la demande: **05.12.2007**
(21) Numéro de dépôt: 06114623.9
(22) Date de dépôt: 29.05.2006
(51) Int. Cl.: G09F 9/30, G02B 27/22, G09F 19/14

(54) **Dispositif d'affichage d'un imprimé enterlacé**

(71) Demandeur: Hansenne, Yves, 1190 Bruxelles (BE)
(72) Inventeur: Hansenne, Yves, 1190 Bruxelles (BE)
(74) Mandataire: Gevers, François

(57) **Abrégé**

Dispositif d'affichage d'un imprimé interlacé (1) comprenant un imprimé interlacé (1) et une lentille optique (2), disposée contre l'imprimé interlacé (1), des moyens de fixation (3) élastiques et un système d'entraînement relié audit imprimé par l'intermédiaire de moyen de transmission, ledit système d'entraînement étant agencé pour entraîner ledit au moins un imprimé selon un mouvement de translation. La lentille optique (2) décrit, par rapport à un observateur qui regarde ladite première face imprimée au travers de la lentille optique (2), un plan concave ou une surface concave et en ce que lesdits moyens de fixation (3) sont des moyens de fixation élastiques (3).

## Description

La présente invention se rapporte à un dispositif d'affichage d'un imprimé interlacé comprenant:
- au moins un imprimé interlacé comprenant une première face imprimée et une deuxième face,
- au moins une lentille optique, disposée contre ladite première face imprimée dudit au moins un imprimé interlacé,
- des moyens de fixation agencés pour relier ledit imprimé interlacé à ladite lentille optique et
- un système d'entraînement relié audit imprimé par l'intermédiaire de moyens de transmission, ledit système d'entraînement étant agencé pour entraîner ledit au moins un imprimé selon un mouvement de translation.

La présente invention se rapporte également à une utilisation du dispositif selon l'invention en tant que dispositif jetable.

On connaît généralement un imprimé interlacé collé contre une lentille qui permet de visualiser plusieurs images par la variation de l'angle de vision de l'observateur. En effet, selon le mouvement relatif de l'observateur et/ou du dispositif, une image différente apparaît.

D'autres dispositif tels qu'indiqués ci-dessus existent. Par exemple, un tel dispositif est connu du document US 6 226 906 qui décrit un système qui fait bouger un imprimé interlacé derrière une lentille et qui permet de visualiser plusieurs images sans variation de l'angle de vision de l'observateur.

Dans le domaine technique des imprimés interlacés, il existe 3 types courant d'affichage animé, en fonction de la position de l'observateur par rapport au système d'affichage animé.

Soit l'affichage animé est un affichage animé inférieur, c'est à dire que l'observateur est situé au dessus du dispositif, soit l'affichage est un affichage animé aléatoire, dans ce cas, l'observateur est situé n'importe où par rapport au niveau de l'affichage, ou encore, l'affichage animé est supérieur, c'est à dire que l'observateur se trouve en dessous du dispositif d'affichage animé.

Le dispositif du document US est un dispositif animé inférieur. Malheureusement, ce dispositif ne permet pas de respecter convenablement la distance focale entre la lentille et l'imprimé et il en résulte que la visualisation des différentes images imprimées de manière interlacée est très aléatoire et entraîne des effets fondus qui empêchent une bonne visualisation des diverses images. En effet, l'imprimé se déforme sous les forces de traction ou de poussée, ce qui provoque la mauvaise qualité visuelle.

L'invention a pour but de pallier les inconvénients de l'état de la technique en procurant un dispositif permettant d'obtenir une meilleure qualité visuelle.

Pour résoudre ce problème, il est prévu suivant l'invention, un dispositif d'affichage d'un imprimé interlacé tel qu'indiqué au début, caractérisé en ce que ladite lentille optique décrit, par rapport à un observateur qui regarde ladite première face imprimée au travers de la lentille optique, un plan concave ou une surface concave et en ce que lesdits moyens de fixation sont des moyens de fixation élastiques.

De cette façon, la lentille décrivant un plan concave, en coopération avec les moyens de fixation élastiques exercent une force sur ledit imprimé interlacé; lesdits moyens de fixation élastiques jouant le rôle de moyens tenseurs agencés pour tendre ledit imprimé interlacé contre ladite lentille optique. La lentille optique, grâce à sa "courbure concave" par rapport à un observateur, exerce une tension de surface sur la face imprimée dudit imprimé interlacé. Ceci permet d'obtenir une distance focale optimale entre ledit imprimé interlacé et ladite lentille optique.

Bien entendu, en fonction de la taille de l'imprimé interlacé et de la lentille optique, les moyens de fixation élastiques présenteront une constante d'élasticité plus ou moins grande, qui sera choisie de manière à respecter la distance focale optimale entre ces derniers.

Par les termes "décrivant un plan concave" ou par les termes "courbure concave", ou encore par "plan ou surface concave présentant une courbure C" on entend une déformation de la lentille de manière à présenter une concavité, c'est-à-dire une surface substantiellement creuse et courbe (elliptique ou circulaire), comme l'intérieur d'un récipient dont l'ouverture est présentée à l'observateur.

La courbure dans un plan (à deux dimensions) (en un point) est définie comme étant l'inverse du rayon du cercle osculateur en ce point; le cercle osculateur étant le cercle qui épouse le mieux possible la courbe.

La courbure C du plan concave de la lentille est donc définie dans un espace à trois dimensions, comme étant l'inverse du rayon du cylindre osculateur ou de la sphère osculatrice. Le cylindre osculateur étant le cylindre qui épouse le mieux possible le plan concave et la sphère osculatrice étant la sphère qui épouse le mieux possible le plan concave.

Selon l'invention, la courbure C peut être telle que le cylindre osculateur soit disposé de manière longitudinale c'est-à-dire de manière parallèle à une longueur à ladite lentille optique s'il échet, de manière latérale, c'est-à-dire de manière parallèle à une largeur de ladite lentille optique s'il échet, de manière diagonale, c'est-à-dire de manière parallèle à une diagonale de ladite lentille optique s'il échet. Tous les cylindres osculateurs pouvant être centrés ou non par rapport à la lentille. De même, la courbure C peut être telle que la sphère osculatrice soit disposée de manière centrée ou non.

Avantageusement, ladite lentille optique présente au moins une première extrémité et au moins une deuxième extrémité ainsi que des moyens de réglage d'une courbure C dudit plan concave ou de ladite surface concave, lesdits moyens de réglage étant agencés pour modifier ladite courbure C par une diminution ou une augmentation d'une distance d la plus courte calculée entre ladite première et ladite deuxième extrémité.

La modification de ladite courbure (ou la modification du rayon du cercle osculateur ou de la sphère osculatrice), à des fins de réglage, permet de parer à une éventuelle dilatation. En effet, les dispositifs d'affichages sont généralement exposés aux rayons lumineux (lampes électriques, halogènes, rayons du soleil, etc.) afin de les mettre bien en valeur. Dans le cas de centre commerciaux, ils sont généralement exposés aux rayons lumineux le jour et à l'obscurité le soir, ce qui malgré les conditions de conditionnement d'air entraîne des déformations cycliques des matériaux. De plus, l'imprimé interlacé est en une première matière alors que la lentille optique est en une autre matière. Ces deux matières ont des coefficients de dilatation sensiblement différents.

Il est donc avantageux de pouvoir ajuster la courbure pour parer à ces dilatations intempestives et assurer que la distance focale, même en condition de dilatation ou de retrait, sera toujours optimale. De même, grâce aux moyens de réglage de la courbure, le montage du dispositif selon l'invention sont grandement simplifiés. Par exemple, lorsque le placeur arrive au site de l'installation, il se pourrait qu'entre le moment où il monte le dispositif selon l'invention et le moment auquel le dispositif est réellement suspendu, la température ait sensiblement varié. Dès lors, il faudra ajuster la courbure afin de parer à la dilatation, ce qui est très simple grâce aux moyens de réglage de la courbure.

Il est également particulièrement avantageux de pouvoir modifier la courbure C de la lentille optique pour modifier le pas de la lentille, afin de le remettre en phase avec le pas de l'imprimé interlacé.

Selon l'invention, il est prévu que les moyens de réglage de la courbure C de la lentille soient reliés à au moins deux extrémités de la lentille. Si la lentille est un quadrilatère régulier, les extrémités sont des arêtes (bord d'extrémité) parallèles ou des coins. Si les extrémités sont des arêtes (rectangle), la distance d (la distance la plus courte entre les extrémités) est calculée entre ces dernières perpendiculairement aux arrêtes, le long d'un plan qui comprend les arêtes. Si les extrémités sont des coins (losange sur sa pointe), la distance d est calculée le long de la droite qui passa par ces deux coins.

Si la lentille est un quadrilatère non régulier, les extrémités peuvent être une arête et un coin, dans ce cas, la distance d la plus courte entre les deux extrémités est calculée perpendiculairement à l'arête en passant par le coin susdit, le long d'un plan qui comprend les deux extrémités. Dans le cas du quadrilatère non régulier, les extrémités peuvent également être deux coins, alors la distance d la plus courte entre les deux extrémités est calculée le long de la droite passant par ces deux points par lesquels passeSi la lentille optique est sensiblement circulaire, alors la première et la deuxième extrémité sont des points opposés l'un à l'autre de la circonférence de celle-ci. La distance d la plus courte entre ces deux extrémités est alors calculée le long de la droite qui passe par ces deux points opposés l'un à l'autre.

Si la lentille est un octogone, régulier ou non, les extrémités peuvent être soit des arrêtes (bord d'extrémité), soit des coins (point d'extrémité) ou encore une arête et un coin. Dans ce cas, la distance d la plus courte entre ces extrémités est calculée de la même façon que pour le quadrilatère régulier ou non.

L'homme de métier comprendra aisément de ce qui précède que la lentille peut être de n'importe quelle forme et qu'elles sont toutes comprises dans la portée de la protection revendiquée.

En réduisant la distance la plus courte entre ces extrémités, la courbure de la lentille sera augmentée alors qu'en augmentant la distance la plus courte entre ces extrémités, la courbure de la lentille sera diminuée. La diminution de la courbure diminue la force et la tension de surface exercée par la lentille optique sur ledit imprimé interlacé tandis que l'augmentation de la courbure augmente la force et la tension de surface exercée par la lentille optique sur ledit imprimé interlacé.

Avantageusement, lesdits moyens de réglage de ladite courbure C sont choisis dans le groupe constitué d'une sangle de longueur ajustable, d'une tige télescopique, d'une tige filetée munie de vis papillon, ou analogues.

Dans une variante préférentielle, la courbure de la lentille est obtenue par un pli courbé. La courbure de la lentille est ajustable par une modification de l'angle du pli courbé.

Comme on l'a mentionné ci-avant, pour ajuster la courbure, il est prévu de réduire ou d'augmenter la distance la plus courte entre la première et la deuxième extrémité. Les moyens ci-dessus, quoi que donné à titre d'exemple non limitatifs sont avantageux par la simplicité de leur mise en oeuvre.

Bien entendu, il est également possible de prévoir d'autres moyens comme des colliers de serrage ou analogue placés le long du plan concave, du côté opposé à l'observateur. La modification de la courbure sera également obtenue dans ce cas par une réduction ou une augmentation la distance la plus courte entre la première et la deuxième extrémité.

Dans une forme de réalisation préférentielle, ledit système d'entraînement comprend une première série de conducteurs électriques placés sur ladite lentille optique, ladite première série de conducteurs électriques étant reliée à une première source d'énergie électrique et une deuxième série de conducteurs électriques placés sur ledit imprimé interlacé, ladite deuxième série de conducteurs électriques étant reliée à une deuxième source d'énergie électrique, lesdites sources d'énergie électriques étant agencées pour produire des courants électriques de telle façon que d'une part, un champ de répulsion se crée entre la première série de conducteurs électriques susdite et la deuxième série de conducteurs électriques, pendant un premier intervalle de temps prédéterminé, et d'autre part, un champ d'attraction se crée entre la première série de conducteurs électriques susdite et la deuxième série de conducteurs électriques, pendant un deuxième intervalle de temps prédéterminé.

De cette façon, le champ de répulsion entre les conducteurs électriques, pendant le premier intervalle de temps, provoque un déplacement de l'imprimé relativement à la lentille dans un sens. Ensuite, le champ d'attraction entre les conducteurs électriques, pendant le deuxième intervalle de temps, provoque un déplacement de l'imprimé relativement à la lentille dans un autre sens, opposé au précédent déplacement.

En particulier, il est prévu selon l'invention que ladite première source d'énergie soit agencée pour produire consécutivement un premier courant continu ayant une première charge pendant un premier intervalle de temps prédéterminé, que ladite deuxième source d'énergie soit agencée pour produire un deuxième courant continu ayant une deuxième charge de signe contraire par rapport à ladite première charge prédéterminée, pendant un deuxième intervalle de temps inférieur au premier intervalle, en particulier égal à la moitié dudit premier intervalle de temps et un troisième courant continu ayant une troisième charge de signe identique à la première charge pendant un troisième intervalle de temps identique au deuxième intervalle de temps.

De cette façon, lorsque la première source d'énergie produit le premier courant continu ayant une première charge pendant un premier intervalle de temps prédéterminé, par exemple un courant continu négatif pendant 10 secondes dans la première série de conducteurs électriques reliés à la lentille optique, la deuxième source produit un deuxième courant continu ayant une deuxième charge de signe contraire par rapport à ladite première charge prédéterminée, pendant un deuxième intervalle de temps égal à la moitié dudit premier intervalle de temps dans la deuxième série de conducteurs électriques de l'imprimé interlacé, par exemple, un courant continu positif pendant 5 secondes.

Il se crée donc entre la première série de conducteurs électriques et la deuxième série de conducteurs électriques un champ électrique d'attraction. Ce champ électrique d'attraction est prévu pour provoquer un déplacement de l'imprimé interlacé selon un mouvement de translation par rapport à la lentille.

Ensuite, la deuxième source produit le troisième courant susdit qui est donc un courant continu négatif également pendant 5 secondes dans la deuxième série de conducteurs électriques de l'imprimé interlacé.

Il se crée donc entre la première série de conducteurs électriques et la deuxième série de conducteurs électriques un champ électrique de répulsion. Ce champ électrique de répulsion est prévu pour provoquer un déplacement de l'imprimé interlacé selon un mouvement de translation opposé au mouvement résultant du champ électrique d'attraction par rapport à la lentille.

Dans une variante, la première source d'énergie produit un troisième courant continu ayant une troisième charge de signe contraire à ladite première charge pendant un troisième intervalle de temps identique au premier intervalle de temps prédéterminé. Ceci permet entre autres de d'augmenter les périodes d'affichages des différentes images interlacées dans ledit imprimé.

Dans une autre variante, le courant passant dans la première série de conducteurs électriques est un courant alternatif ayant une fréquence différente de celle du courant passant dans la deuxième série de conducteur. Ceci permettant qu'un champ de répulsion suivi d'un champ d'attraction soit périodiquement créé.

Dans une forme de réalisation préférentielle, ladite première série de conducteurs électriques et/ou ladite deuxième série de conducteurs électriques comprend un tracé d'encre conductrice.

Ceci peut par exemple simplifier la fabrication de l'imprimé interlacé muni de sa deuxième série de conducteurs électriques sans augmenter substantiellement son épaisseur et donc sans nuire à la force et à la tension de surface entre la lentille et ledit imprimé.

Dans une forme de réalisation variante selon l'invention, le système d'entrainement comprend un premier corps susceptible d'être aimanté disposé sur la lentille optique, en particulier un électroaimant, un deuxième corps aimanté, disposé sur ledit imprimé interlacé et une source d'énergie électrique permettant de faire passer périodiquement un courant dans ledit premier corps susceptible d'être aimanté, en particulier dans l'électroaimant et de générer un champ magnétique au sein de ce dernier pendant un intervalle de temps prédéterminé.

Dès lors, lorsque le premier corps sur la lentille est aimanté, il se crée un champ magnétique de répulsion entre ce dernier et le deuxième corps aimanté sur ledit imprimé interlacé, ce qui résulte en un mouvement relatif entre l'imprimé interlacé et la lentille optique de translation. Lorsque le premier corps n'est pas aimanté, c'est-à-dire lorsqu'aucun courant ne passe dans celui-ci, il se crée un champ magnétique d'attraction entre ce dernier qui se trouve sur la lentille optique et le deuxième corps aimanté sur ledit imprimé interlacé, ce qui résulte en un mouvement relatif entre l'imprimé interlacé et la lentille optique de translation qui est opposé au mouvement de translation lorsque le premier corps est aimanté.

Dans une autre variante de l'invention, ledit système d'entraînement comprend un moteur et un engrenage réducteur dont un arbre entraîne une came, laquelle came entraîne un suiveur de came qui est prévu pour être d'une part en contact avec ladite came et d'autre part relié au dit imprimé interlacé.

Ceci permet de maintenir un ordre dans la vision des images. Par les termes "ordre de vision", on entend tout ordre prédéterminé imposé par la came, qui sera respecté à chaque tour de came. En effet, dans le dispositif d'affichage selon l'invention, il est possible de concevoir un dispositif à trois images interlacées dans l'imprimé, qui affichera la séquence d'images suivantes: l'image n°1, l'image n°2, l'image n°3, l'image n°1, l'image n°3, l'image n°2, l'image n°1, etc.

En effet, dans les dispositifs de l'art antérieur, l'ordre de visualisation des images est un réel problème. En effet, le mouvement est du type sinusoïdal. Donc pour passer de la dernière image à la première image, il est nécessaire de repasser les images intermédiaires dans l'ordre inverse du mouvement précédent. L'ordre est ainsi inversé. Il n'est également pas possible dans ces dispositifs de l'art antérieur que chaque image apparaisse un même nombre de fois.

Dans l'invention décrite ici, le retour au point de départ est, par exemple, assuré par la gravité. Il en résulte un mouvement dont l'ordre est toujours respecté. Cette came permet également de modifier la vitesse de visualisation, en modifiant le point d'appui du suiveur de came. La vitesse est modifiée lorsque la came joue le rôle de levier, en jouant sur la position du pivot par rapport au levier sur le suiveur de came. On peut aussi avantageusement conserver l'ordre des images en gardant une partie de la sinusoïde, le retour s'effectuant par la gravité ou via une force de direction opposée.

Dans le dispositif selon l'invention, le travail du moteur peut être soulagé si l'on applique une force opposée à la force de gravité au moyen d'un ressort ou d'un contre poids. Ceci permet d'économiser l'énergie électrique, ce qui peut s'avérer particulièrement utile, surtout si le dispositif fonctionne à l'aide de piles ou de petits accumulateurs.

Il peut aussi être avantageux de lubrifier l'imprimé (le visuel) et/ou la lentille afin de diminuer l'usure et les forces de frottement et par conséquent, le travail de moteur.

Avantageusement, pour un imprimé interlacé à n images interlacées, ledit suiveur de came est prévu pour décrire une trajectoire le long de la circonférence de ladite came comprenant:
- un nombre x de parties circonférentielles, x étant supérieur ou égal à n, chaque partie circonférentielle ayant un rayon prédéterminé, le nombre de rayons prédéterminés différents étant au moins égal à n,
- un nombre x de parties de transition, chaque partie de transition reliant deux parties circonférentielles consécutives.

Une fois la trajectoire du suiveur de came définie, et donc la circonférence de la came conçue, l'ordre prévu est chaque fois respecté. Si sur un tour de came, l'image 1 doit s'afficher trois fois et être chaque fois suivie de l'image 2 qui sera suivie de l'image 3, à chaque tour de came, cette séquence sera répétée. Dans le cas d'un affichage publicitaire, il est également possible de concevoir qu'une image reste plus longtemps ou qu'une autre apparaisse ponctuellement, par exemple, il est envisageable que l'image 1 s'affiche chaque fois entre l'image 2 et l'image 3, elle sera donc exposée deux fois plus souvent.

Avantageusement, les n images de l'imprimé interlacé sont prévues pour être affichées à une vitesse qui est d'autant plus grande que x est grand. Comme mentionné ci-avant, l'affichage des n images est très flexible et modulable, il est possible d'afficher les images un très grand nombre de fois et pendant très peu de temps, ou de faire le contraire. Tout dépend du degré d'animation que l'on souhaite.

Dans une forme de réalisation particulière, chaque partie de transition reliant deux parties circonférentielles consécutives présente une longueur prédéterminée prévue pour être parcourue par ledit suiveur de came lors d'un passage d'une image à une autre.

Dans cette forme particulière de l'invention, il est possible de réduire fortement, voire de supprimer l'effet fondu enchaîné, en modifiant le déplacement uniforme de l'imprimé interlacé et donc en réduisant cette longueur prédéterminée et en remplaçant le déplacement uniforme de l'imprimé interlacé par un déplacement saccadé en créneaux. La sinusoïde devient un signal périodique carré et/ou rectangle, ou un signal périodique constitué d'une pluralité de carrés et/ou rectangle.

Cette caractéristique a pour résultat qu'au plus la longueur prédéterminée de la partie de transition sera grande, au plus l'effet de fondu enchaîné entre deux images sera important. Au contraire, au plus la longueur prédéterminée sera petite, au plus le passage d'une image à l'autre sera rapide et net. Bien entendu, en fonction des souhaits de l'utilisateur, les deux sont possibles, il est possible de prévoir un effet fondu entre une première image et une deuxième image et un effet de passage net de la deuxième image à la troisième image.

Particulièrement, selon l'invention, le mouvement de translation de l'imprimé interlacé est sensiblement dirigé de ladite première extrémité à ladite deuxième extrémité ou inversement.

Avantageusement, un premier support est placé contre ladite deuxième face de l'imprimé interlacé.

Dans certains cas, lorsque le mouvement l'imprimé interlacé est imposé pendant une période de temps longue, il est possible que l'imprimé se déforme légèrement à cause du frottement contre la lentille. Généralement, cette déformation est contrecarrée par les moyens élastiques, mais dans certains cas, lorsque le dispositif fonctionne pendant longtemps, l'élasticité des moyens de fixation élastique se perd et ne parvient plus à contrecarrer la déformation de l'imprimé interlacé.

Comme l'imprimé interlacé est généralement une feuille souple, il est facilement déformé par le frottement de la lentille et ceci peut provoquer un déphasage. Dès lors, le premier support le rigidifie et évite les ondulations de l'imprimé interlacé qui pourraient nuire à la qualité visuelle.

Dans une variante, ledit premier support est solidaire de l'imprimé interlacé et comporte lesdits moyens de transmission.

Pour remédier à ce qui est mentionné ci-dessus et pour améliorer la rigidité de l'imprimé interlacé, il a été prévu de le coller sur un premier support, par exemple un carton substantiellement rigide, un plastique fin ou un autre type de support pour empêcher sa déformation. De ceci, il résulte une séquence d'image très nette, sans décalage.

Avantageusement, le dispositif selon l'invention comprend en outre des rainures de guidages dans ou sur ladite lentille optique, agencées pour guider ledit mouvement de translation dudit imprimé interlacé. Particulièrement, lesdites rainures de guidages comprennent une butée permettant de limiter le mouvement de translation.

Ceci évite les mouvements parasites qui pourraient se produire de manière non perpendiculaire audit cylindre osculateur et qui pourraient réduire la qualité visuelle.

De préférence, le dispositif selon l'invention comprend des moyens d'ajustement mutuel de la position entre ladite lentille optique et ledit au moins un imprimé interlacé.

Plus préférentiellement, le dispositif selon l'invention comprend en outre un levier respectivement relié à la lentille optique ou audit imprimé interlacé et un pivot fixé respectivement audit imprimé interlacé ou à ladite lentille optique, ledit levier et ledit pivot étant tous deux agencés pour assurer un ajustement mutuel de position entre ladite au moins une lentille et ledit au moins un imprimé interlacé.

L'ajustement mutuel pour contrecarrer un mauvais placement de l'imprimé interlacé derrière la lentille, une déformation, une dilatation ou une usure améliore la qualité visuelle, en particulier, la succession d'images interlacés dans l'imprimé interlacé.

D'autres formes de réalisation du dispositif d'affichage suivant l'invention sont indiquées dans les revendications annexées.

L'invention a aussi pour objet une utilisation du dispositif selon l'invention en tant que dispositif jetable.

En effet, de plus en plus, les grands centres commerciaux qui sont de grands consommateurs de ce type de dispositif d'affichage qui attire fortement l'oeil du consommateur sont demandeurs de dispositifs jetables afin de ne pas devoir remplacer les imprimés interlacés entre une utilisation et une autre. Ceci leur permet de gagner du temps et en particulier le temps nécessaire à l'ajustement des positions mutuelles. Il est donc prévu selon l'invention de fournir un dispositif d'affichage ultra simple et très peu coûteux permettant justement d'en faire un dispositif jetable pour répondre à cette demande sans cesse croissante.

D'autres caractéristiques, détails et avantages de l'invention ressortiront de la description donnée ci-après, à titre non limitatif et en faisant référence aux dessins annexés.

Sur les figures, les éléments identiques ou analogues portent les mêmes références.

La figure 1 est une vue en perspective éclatée d'un dispositif selon l'invention.

La figure 2 est une vue de face de plusieurs variantes (A-D) du dispositif d'affichage selon l'invention.

La figure 3 est une vue en perspective du dispositif selon l'invention comprenant les moyens de réglage de la courbure C.

La figure 4 est une vue en perspective éclatée d'un dispositif selon l'invention comprenant des moyens d'entraînement comprenant une première et une deuxième série de conducteurs électriques.

Les figures 5A et B illustrent schématiquement le fonctionnement du dispositif selon l'invention lorsque l'imprimé interlacé est entraîné en translation par les moyens d'entraînement illustrés à la figure 3.

La figure 6 est une vue en perspective éclatée d'un dispositif selon l'invention comprenant des moyens d'entraînement comprenant un premier corps susceptible d'être aimanté et un deuxième corps aimanté.

Les figures 7A et 7B illustrent schématiquement le fonctionnement du dispositif selon l'invention lorsque l'imprimé interlacé est entraîné en translation par les moyens d'entraînement illustrés à la figure 5

La figure 8 est une vue arrière d'un dispositif selon l'invention comprenant des moyens d'entraînement qui comprennent une came et un suiveur de came.

Les figures 9 a à d sont des formes de réalisations particulières de la came du système d'entraînement du dispositif d'affichage d'un imprimé interlacé selon l'invention.

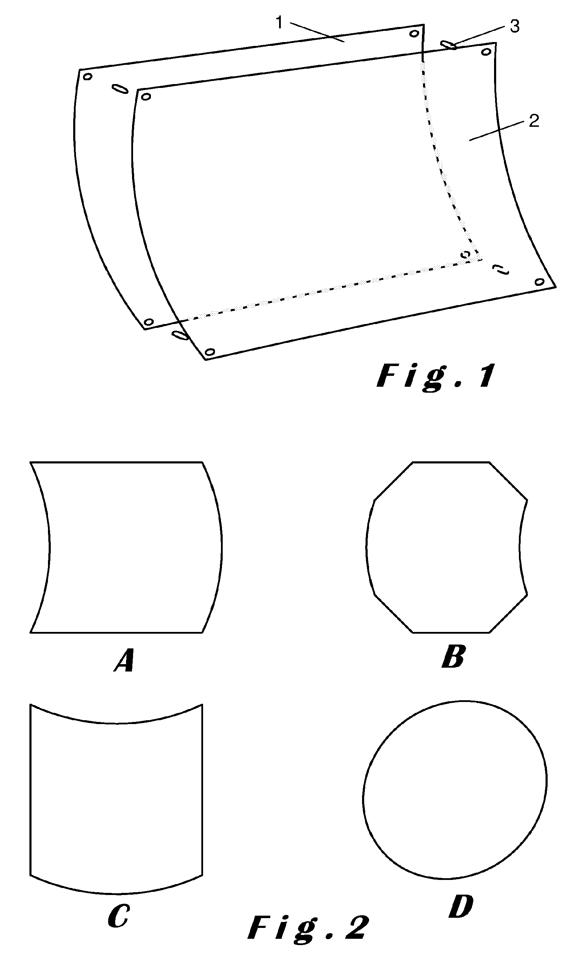

Comme on peut le voir à la figure 1, le dispositif d'affichage d'un imprimé interlacé comprend un imprimé interlacé 1 comprenant une première face imprimée et une deuxième face, une lentille optique 2 et des moyens de fixation élastiques 3 pour relier l'imprimé interlacé 1 à la lentille optique 2. La lentille optique 2 est disposée contre la face imprimée de l'imprimé interlacé 1, entre l'observateur et la face imprimée. Comme on peut le voir, la lentille optique 2 décrit, par rapport à un observateur qui regarde la première face imprimée au travers de la lentille 2, un plan concave ou une surface concave.

De cette façon, la lentille 2 décrivant un plan concave, en coopération avec les moyens de fixation élastiques 3, exercent une force sur l'imprimé interlacé 1; lesdits moyens de fixation élastiques 3 jouant le rôle de moyens tenseurs agencés pour tendre ledit imprimé interlacé 1 contre ladite lentille optique 2. La lentille optique 2 exerce une tension de surface sur la face imprimée dudit imprimé interlacé 1. Ce qui permet d'obtenir une distance focale optimale entre ledit imprimé interlacé 1 et ladite lentille optique 2.

Bien entendu, en fonction de la taille de l'imprimé interlacé et de la lentille optique, les moyens de fixation élastiques 3 présenteront une constante d'élasticité plus ou moins grande, qui sera choisie de manière à respecter la distance focale optimale entre ces derniers.

Par les termes "décrivant un plan concave" ou par les termes "courbure concave", ou encore par "plan ou surface concave présentant une courbure C" on entend une déformation de la lentille 2 de manière à présenter une concavité, c'est-à-dire une surface substantiellement creuse et courbe (elliptique ou circulaire), comme l'intérieur d'un récipient dont l'ouverture est présentée à l'observateur.

Comme on peut le voir à la figure 2, l'imprimé interlacé 1 et la lentille optique 2 du dispositif selon l'invention peuvent avoir n'importe quelle forme. Bien entendu, il est souhaitable pour des raisons esthétiques que les formes de la lentille optique 2 et de l'imprimé interlacé 1 soient sensiblement similaires.

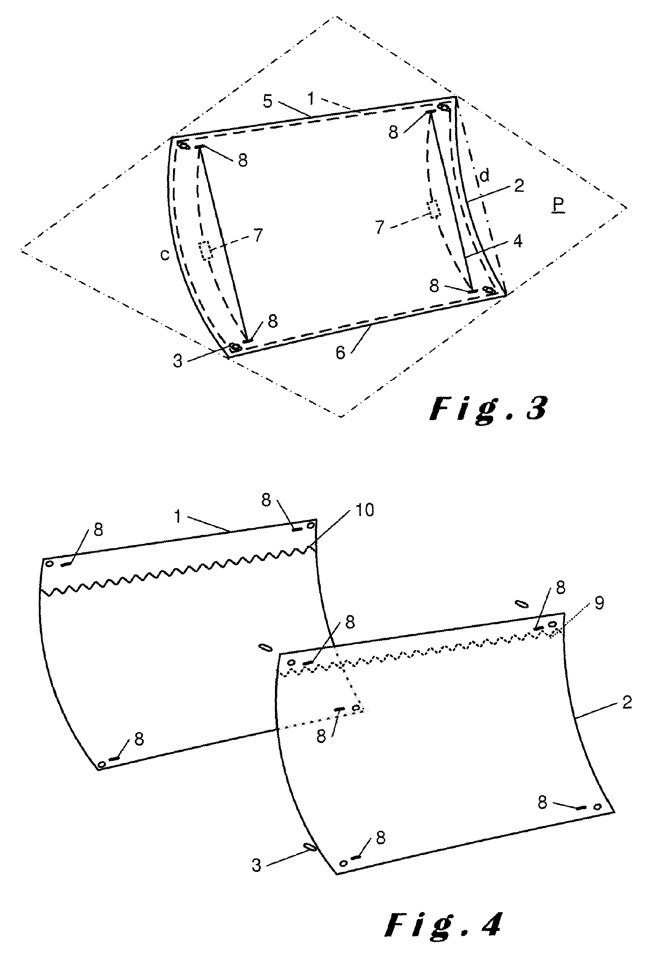

A la figure 3, les moyens de réglage 4 de la courbure du dispositif selon l'invention ont été illustrés. Comme on l'a mentionné précédemment, la lentille optique 2 présente au moins une première extrémité 5 et au moins une deuxième extrémité 6 (en l'occurrence, respectivement, un premier bord d'extrémité 5 et un deuxième bord d'extrémité 6). Les moyens de réglage 4 permettent de modifier la courbure C par une diminution ou une augmentation d'une distance la plus courte d calculée entre le premier bord d'extrémité 5 et le deuxième bord d'extrémité 6 le long du plan P passant par les deux bords d'extrémité 5,6 susdits.

Avantageusement, la distance d la plus courte entre la première extrémité 5 et la deuxième extrémité 6 a une valeur comprise entre 95% de D et 50 % de D, D étant la distance entre la première extrémité 5 et la deuxième extrémité 6 calculée le long du plan ou de la surface concave de la lentille optique (2). De préférence, d est comprise entre 80% et 60% de la distance D.

De cette façon, en ajustant la courbure C, la distance focale, même en condition de dilatation ou de retrait, sera toujours optimale et il sera possible en modifiant la courbure C de la lentille optique de modifier le pas de la lentille, afin de le remettre en phase avec le pas de l'imprimé interlacé.

Dans la forme de réalisation illustrée à la figure 3, les moyens de réglage 4 de la courbure C de la lentille optique 2 sont sensiblement reliés aux deux bords d'extrémités 5 et 6 et sont constitué d'une sangle 4 dont la longueur est ajustable par l'intermédiaire d'une pince 7. De préférence, la sangle 4 est un fil de nylon transparent afin de ne pas gêner la visualisation par l'observateur du contenu de l'imprimé interlacé 1. Le fil de nylon 4 passe au travers d'orifices 8 qui peuvent être percés uniquement dans la lentille 2 ou dans la lentille 2 et dans l'imprimé interlacé 1, de préférence aux quatre coins lorsque celle-ci est un quadrilatère.

La longueur de ce fil de nylon ou cette sangle 4 peut être réduite par le placeur dudit dispositif selon l'invention et maintenue à cette longueur par la pince 7. Ceci a pour résultat de réduire la distance la plus courte d entre les bords d'extrémité 5 et 6 calculée le long du plan P passant par les deux bords d'extrémité 5 et 6. La courbure C de la lentille sera augmentée et le rayon R (R= 1/C) du cylindre osculateur sera réduit. En augmentant la longueur de la sangle ou fil de nylon 4, on augmente la distance la plus courte d calculée le long dudit plan P entre les bords d'extrémité 5 et 6 par lesquels passe le plan P. La courbure C de la lentille 2 sera réduite. La diminution de la courbure C diminue la force et la tension de surface exercée par la lentille optique 2 sur l'imprimé interlacé tandis que l'augmentation de la courbure C augmente la force et la tension de surface exercée par la lentille optique 2 sur ledit imprimé interlacé 1.

De plus, les moyens de fixation élastique réduisent le gondolement des imprimés lorsqu'ils se trouvent exposés dans des conditions humides.

Comme on peut le voir à la figure 4, dans une première forme de réalisation, le système d'entraînement comprend une première série de conducteurs 9 électriques placés sur la lentille optique 2, du côté interne, c'est-à-dire, du côté qui fait face à l'imprimé interlacé 1. Le système d'entraînement comprend également une deuxième série de conducteurs 10 électriques placés sur l'imprimé interlacé 1. Ces conducteurs électriques peuvent être un circuit imprimé, une encre conductrice ou également un conducteur de type fil métallique, par exemple collé.

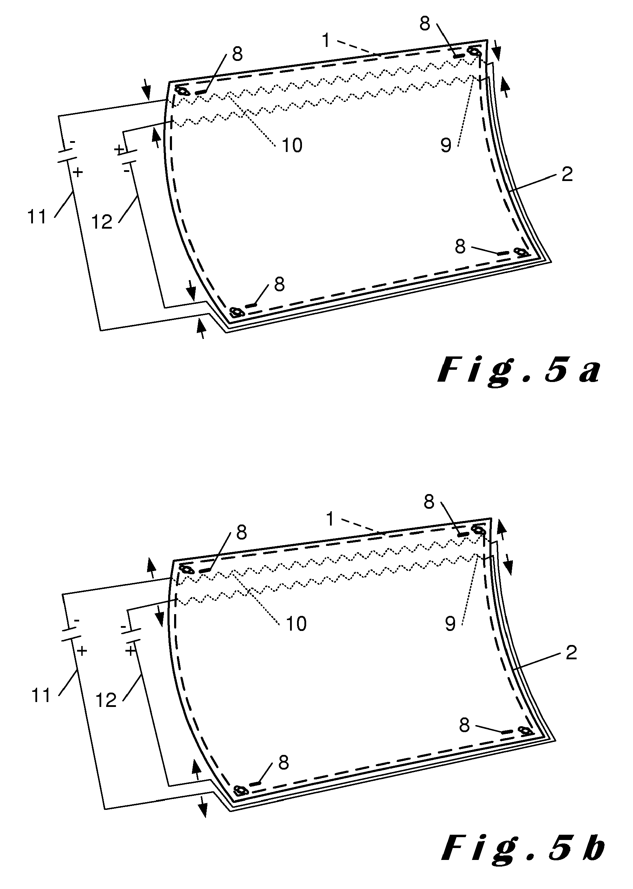

Comme on peut le voir aux figures 5 A et B, la première série de conducteurs électriques 9 est reliée à une première source d'énergie électrique 11 et la deuxième série de conducteurs électriques 10 placés sur l'imprimé interlacé 1 est reliée à une deuxième source d'énergie électrique 12.

A la figure 5 A, à titre d'exemple non limitatif, la première source d'énergie électrique 11 produit un courant continu négatif pendant 10 secondes. Pendant les cinq premières secondes, la deuxième source d'énergie électrique 12 produit un autre courant continu positif. Il se crée donc un champ d'attraction (voir les flèches à gauche du dispositif à la figure 5A) entre les deux séries de conducteurs électriques 9 et 10 et ceci a pour effet de déplacer l'imprimé interlacé 1 par rapport à la lentille 2 (par exemple suivant la flèche au dessus du dispositif selon l'invention sur cette même figure).

La figure 5B représente à titre d'exemple, les cinq secondes suivantes. Pendant ces cinq secondes, la première source d'énergie électrique 11 produit toujours un courant continu négatif alors que la deuxième source d'énergie électrique 12 produit un courant continu négatif. Il se crée donc un champ de répulsion (voir les flèches à gauche du dispositif à la figure 5B) entre les deux séries de conducteurs électriques 9 et 10 et ceci a pour effet de déplacer l'imprimé interlacé 1 par rapport à la lentille 2 dans l'autre sens par rapport à celui représenté à la figure 5B (par exemple suivant la flèche au dessus du dispositif selon l'invention sur cette même figure).

De cette façon, le dispositif selon l'invention est très peu coûteux et répond aux besoins de la grande distribution qui souhaite remplacer tout le dispositif plutôt que de changer juste l'imprimé pour des raisons de gain de temps. Le dispositif jetable selon l'invention doit dès lors juste être déballé, relié aux sources d'énergie et ensuite éventuellement ajusté au niveau de la phase et/ou de la courbure.

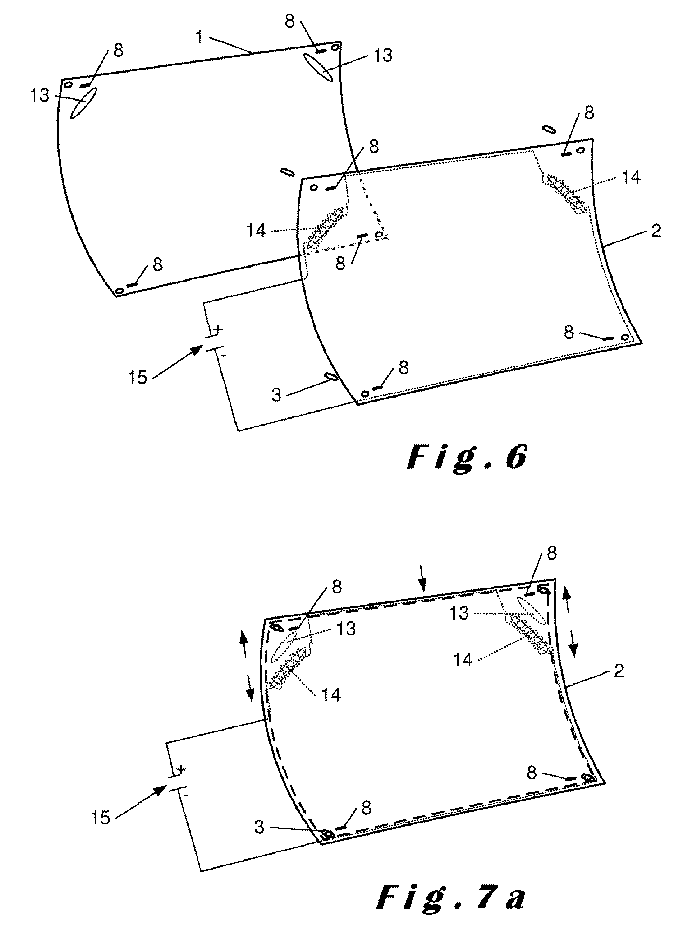

La figure 6 représente un dispositif selon l'invention munie d'une variante du système d'entraînement selon l'invention.

Comme on peut le voir, le système d'entrainement comprend au moins un premier corps susceptible d'être aimanté 14 (en particulier deux) disposé sur la lentille optique 2. Ces corps sont par exemple des électroaimants. L'imprimé interlacé 1 comprend un deuxième corps aimanté 13. Les électroaimants 14 sont reliés à une source d'énergie électrique 15 permettant de faire passer périodiquement un courant dans ledit premier corps susceptible d'être aimanté 14 c'est-à-dire dans chaque électroaimant 14.

A la figure 7A, un courant électrique passe dans chaque électroaimant 14, ce qui permet de générer un champ magnétique au sein de ce dernier (14) pendant un intervalle de temps prédéterminé. Chaque corps 14 devient donc aimanté pendant cet intervalle de temps. Entre ces électroaimants 14 et les corps aimantés 13, un champ magnétique de répulsion se crée entre eux (voir flèches à gauche du dispositif selon l'invention à la figure 7A). De ceci résulte un mouvement relatif de translation entre l'imprimé interlacé 1 et la lentille optique 2 (voir flèche au dessus du dispositif selon l'invention à la figure 7A).

A la figure 7B, la source d'énergie électrique 15 n'émet plus. Chaque premier corps (électroaimant) 14 n'est plus aimanté et est donc attiré par l'aimant 13. Il se crée un champ magnétique d'attraction entre eux (voir flèches à gauche du dispositif selon l'invention à la figure 7B). De ceci résulte en un mouvement relatif entre l'imprimé interlacé 1 et la lentille optique 2 de translation opposé à celui de la figure 7A) (voir flèche au dessus du dispositif selon l'invention à la figure 7B).

De cette façon, le dispositif selon l'invention est très peu coûteux et répond aux besoins de la grande distribution qui souhaite remplacer tout le dispositif plutôt que de changer juste l'imprimé pour des raisons de gain de temps. Le dispositif jetable selon l'invention doit dès lors juste être déballé, relié aux sources d'énergie et ensuite éventuellement ajusté au niveau de la phase et/ou de la courbure.

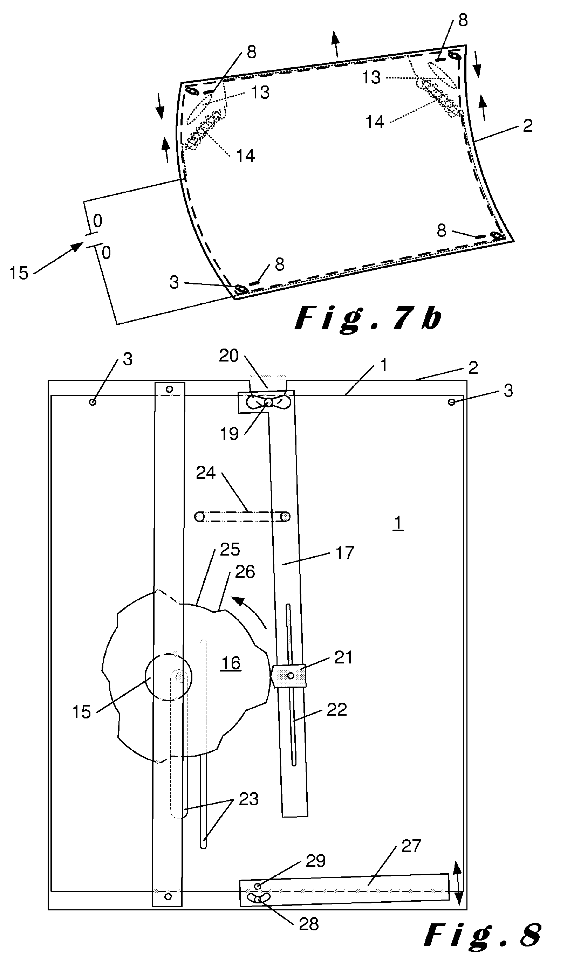

A la figure 8, Le système d'entraînement 2 est fixé sur la lentille optique 2 et comprend un moteur et un engrenage réducteur, tous deux représentés schématiquement par le boîtier 15 dont un arbre entraîne une came 16. La came 16 entraîne un suiveur de came 17 qui est prévu pour être d'une part en contact avec ladite came 16 et d'autre part reliée à l'imprimé interlacé 1 par l'intermédiaire d'un rivet 19. Le suiveur de came 17 est prévu pour transformer un mouvement circulaire de la came 16 en un mouvement de translation qui est transmis à l'imprimé interlacé par l'intermédiaire du rivet 19 solidaire de l'imprimé interlacé 1 mais mobile dans un moyen de guidage 20 fabriqué dans la lentille optique 2. La partie du suiveur de came 17 en contact avec la came 16 comprend une protubérance 21 qui est prévue pour glisser sur la circonférence de la came 16. A des fins de flexibilité, il est possible de changer de came 16 lorsque le nombre d'images ou la séquence d'images souhaitées diffère. Dès lors, la protubérance 21 doit pouvoir être placée sur le suiveur de came 17 de manière réglable et ajustable. Dès lors, la protubérance 21 est montée coulissante dans une rainure de guidage 22 et peut être maintenue en place par exemple par une vis papillon.

D'une manière analogue, les éléments du système d'entraînement doivent pouvoir être déplacés pour pouvoir être adaptables à des systèmes plus ou moins grand, les cames doivent pouvoir être interchangées, etc. Dès lors, une série de rainure 23 d'ajustement de taille ou de position des éléments sont prévues.

De plus, un élément élastique 24 permet de garder le contact entre le suiveur de came 17, plus particulièrement entre la protubérance 21 et la came 16. En effet, lorsque le rayon d'une partie circonférentielle 25 est réduit, il faut maintenir le contact entre le suiveur de came 17 et la came 16. A cet effet, l'élément élastique 24 ramène la protubérance 21 contre la came 16, même lorsque le rayon d'une partie circonférentielle 25 varie brusquement.

La came 16 comprend un nombre x de parties circonférentielles 25. Dans l'exemple illustré, le nombre x vaut 9, l'imprimé, non illustré à la figure 1 comprend 3 images interlacées. Les x parties circonférentielles 25 sont chacune séparées d'une partie de transition 26. Puisque le nombre x vaut 9, ceci signifie que chaque image de l'imprimé sera affichée trois fois par tour de came 16. Le nombre de rayons prédéterminés différents des parties circonférentielles vaut n et vaut donc dans l'exemple précité 3.

Pour un imprimé interlacé à n images interlacées, ledit suiveur de came 17 est prévu pour décrire une trajectoire le long de la circonférence de ladite came 16 comprenant:
- un nombre x de parties circonférentielles 25, x étant supérieur ou égal à n, chaque partie circonférentielle 25 ayant un rayon prédéterminé, le nombre de rayons prédéterminés différents étant au moins égal à n,
- un nombre x de parties de transition 26, chaque partie de transition 26 reliant deux parties circonférentielles consécutives 25.

Comme on l'a mentionné précédement, les n images de l'imprimé interlacé sont prévues pour être affichées à une vitesse qui est d'autant plus grande que x est grand. Par tour de came 16, le nombre minimal d'apparition de chaque image est 1.

Dans une forme de réalisation particulière, chaque partie de transition 26 reliant deux parties circonférentielles consécutives 25 présente une longueur prédéterminée prévue pour être parcourue par ledit suiveur de came 17 lors d'un passage d'une image à une autre.

Au plus la longueur prédéterminée de la partie de transition 26 est grande, au plus l'effet de fondu enchaîné entre les images sera important. Au plus cette longueur prédéterminée est petite, au plus le passage d'une image à l'autre est rapide et net, voire même saccadé.

Comme on l'a également mentionné précédemment, le dispositif selon l'invention comprend un levier 27 et un pivot 28. Le levier 27 et le pivot 28 sont tous deux agencés pour assurer un ajustement mutuel de position entre ladite au moins une lentille optique 2 et ledit au moins un imprimé interlacé 1. Le pivot 27 est solidaire de la lentille optique 2 alors que le levier 27 est relié à l'imprimé au moyen d'un point de fixation 29 de type rivet.

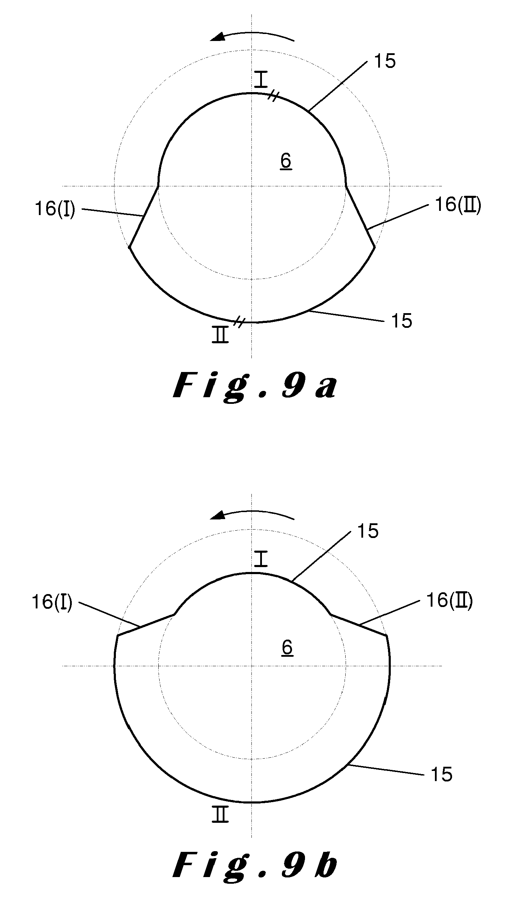

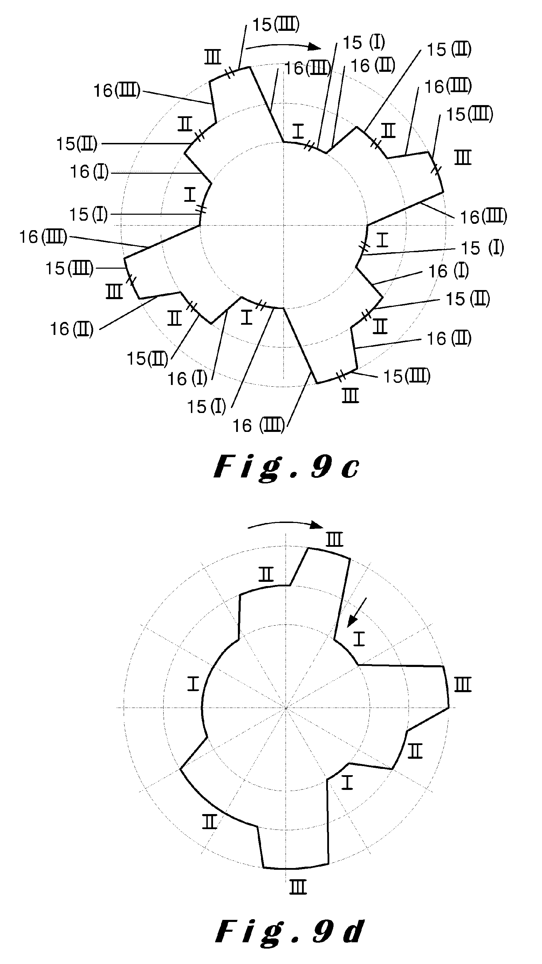

Les figures 9 a-d illustrent différentes configurations de circonférence de came 16.

Les images observées au moment où le suiveur de came 17 est sur une partie circonférentielle 25 particulière de la came 16, sont à titre d'exemple, représentées par des chiffres romains I, II et III.

A la figure 9a, pour un imprimé interlacé comprenant deux images, par exemple l'image I et l'image II, la came dessinée permet d'obtenir un affichage de l'image I et de l'image II pendant un intervalle de temps identique pour l'une et pour l'autre puisque les longueurs des arcs des parties circonférentielles sont identiques. En détail, lorsque la protubérance 21 du suiveur de came 17 est en contact avec la partie circonférentielle 25 (I) de la came 16, l'image I est affichée, la came 16 étant en rotation, le suiveur de came 17 va ensuite être en contact avec la partie de transition 26 (I), dans ce cas, l'image I change pour l'image II. Plus la pente de la partie de transition 26 (I) est abrupte, plus le changement est net et au moins il y a de fondu. Lorsque la protubérance 21 du suiveur de came 17 est en contact avec la partie circonférentielle 25 (II) de la came 16, l'image II est affichée, la came 16 étant toujours en rotation, le suiveur de came 17 va ensuite être en contact avec la partie de transition 26 (II), dans ce cas, l'image II change pour l'image I.

La came 16 illustrée à la figure 9b fonctionne selon exactement le même principe si ce n'est que l'intervalle de temps pendant lequel l'image I est affichée est plus long que l'intervalle de temps pendant lequel l'image Il est affichée.

La came 16 illustrée à la figure 9c s'applique à un imprimé interlacé 1 comprenant 3 images, par exemple une image I et une image II. Sur un tour de came 16, chaque image est représentée 4 fois. Bien entendu ce nombre multiplicateur peut être bien inférieur ou bien supérieur, toutes les combinaisons étant possibles. Selon la conception de la came 16, chaque image est prévue pour être affichée pendant un même intervalle de temps, les longueurs des arcs des parties circonférentielles sont toutes égales entre elles. Bien entendu, toutes les variations sont également possibles. Les images sont également prévues pour être chacune affichées un même nombre de fois et la symétrie de la came permet de reproduire chaque fois une séquence identique. Plus particulièrement, sur un tour de came, la séquence suivante est observée : I, II, III, I, II, III, I, II, III, et encore I, II, III. Bien entendu, dans certaines applications, il pourra être avantageux que l'image I soit remplacée, à titre d'exemple non limitatif, par un produit à vendre, l'image II par le produit en fonction et l'image III par le prix du produit.

En détails et en fonctionnement, lorsque la protubérance 21 du suiveur de came 17 est en contact avec la partie circonférentielle 25 (I) de la came 16, l'image I est affichée, la came 16 étant en rotation, le suiveur de came 17 va ensuite être en contact avec la partie de transition 26 (I), dans ce cas, l'image I change pour l'image Il. Plus la pente de la partie de transition 26 (I) est abrupte, plus le changement est net et au moins il y a de fondu. Lorsque la protubérance 21 du suiveur de came 17 est en contact avec la partie circonférentielle 25 (II) de la came 16, l'image Il est affichée, la came 16 étant toujours en rotation, le suiveur de came 17 va ensuite être en contact avec la partie de transition 26 (II), dans ce cas, l'image II change pour l'image III. Lorsque la protubérance 21 du suiveur de came 17 est en contact avec la partie circonférentielle 25 (III) de la came 16, l'image III est affichée, la came 16 étant toujours en rotation, le suiveur de came 17 va ensuite être en contact avec la partie de transition 26 (III), dans ce cas, l'image III change pour l'image I, et le cycle reprend comme ci-dessus. Ceci se produit quatre fois pour un tour de came 16.

A la figure 9d, l'ordre des images n'est pas une séquence répétée, et les temps d'affichages ainsi que les nombres d'apparition de chaque image sont différents.

Le fonctionnement est identique à ce qui a été décrit ci-dessus, à l'exception du fait que la séquence est la suivante (début indiqué par une flèche): I, III, II, I, III, II, I, II, III et le cycle recommence... Comme on le voit aisément, certaines images restent longtemps affichées par rapport à d'autres, ce qui pourrait être particulièrement avantageux lorsque dans le cadre de campagne de publicité on souhaite mettre l'accent sur une caractéristique plus que sur le prix par exemple.

Dans toutes les formes de réalisations prévues selon l'invention, le système d'entraînement est relié à l'imprimé par l'intermédiaire de moyens de transmission. Par exemple, les moyens de transmission peuvent être la colle fixant les conducteurs électriques à l'imprimé et à la lentille ou fixant les électroaimants ou les aimants. Ils peuvent être l'encre conductrice ou encore un rivet qui fixe le suiveur de came à l'imprimé.

Il est bien entendu que la présente invention n'est en aucune façon limitée aux formes de réalisations décrites ci-dessus et que bien des modifications peuvent y être apportées sans sortir du cadre des revendications annexées.

Par exemple, le premier corps susceptible d'être aimanté peut bien entendu se trouver sur ledit imprimé interlacé et le deuxième corps aimanté sur la lentille optique. Egalement, le deuxième corps aimanté peut également remplacé par un corps susceptible d'être aimanté (un électroaimant), l'important étant de créer en alternance un champ de répulsion et un champ d'attraction.

## Revendications

1. Dispositif d'affichage d'un imprimé interlacé (1) comprenant:
- au moins un imprimé interlacé (1) comprenant une première face imprimée et une deuxième face,
- au moins une lentille optique (2), disposée contre ladite première face imprimée dudit au moins un imprimé interlacé (1),
- des moyens de fixation (3) agencés pour relier ledit imprimé interlacé (1) à ladite lentille optique (2) et
- un système d'entraînement relié audit imprimé par l'intermédiaire de moyen de transmission, ledit système d'entraînement étant agencé pour entraîner ledit au moins un imprimé selon un mouvement de translation,
**caractérisé en ce que** ladite lentille optique (2) décrit, par rapport à un observateur qui regarde ladite première face imprimée au travers de la lentille optique (2), un plan concave ou une surface concave et **en ce que** lesdits moyens de fixation (3) sont des moyens de fixation élastiques (3).

2. Dispositif selon la revendication 1, dans lequel ladite lentille optique (2) présente au moins une première extrémité (5) et au moins une deuxième extrémité (6) ainsi que des moyens de réglage d'une courbure C (4) dudit plan concave ou de ladite surface concave, lesdits moyens de réglage (4) étant agencés pour modifier ladite courbure C par une diminution ou une augmentation d'une distance (d) la plus courte calculée entre ladite première (5) et ladite deuxième extrémité (6).

3. Dispositif selon la revendication 2, dans lequel lesdits moyens de réglage (4) de la courbure C sont reliés à la première extrémité (5) et à la deuxième extrémité (6) de ladite lentille optique (2).

4. Dispositif selon la revendication 2, dans lequel lesdits moyens de réglage (4) de ladite courbure C sont choisis dans le groupe constitué d'une sangle de longueur ajustable, d'une tige télescopique, d'une tige filetée munie de vis papillon, ou analogues.

5. Dispositif selon l'une quelconque des revendications précédentes, dans lequel ledit système d'entraînement comprend une première série de conducteurs électriques (9) placés sur ladite lentille optique (2), ladite première série de conducteurs électriques (9) étant reliée à une première source d'énergie électrique (12) et une deuxième série de conducteurs électriques (10) placés sur ledit imprimé interlacé (1), ladite deuxième série de conducteurs électriques (10) étant reliée à une deuxième source d'énergie électrique (11), lesdites sources d'énergie électrique (11,12) étant agencées pour produire des courants électriques de telle façon que d'une part, un champ de répulsion se crée entre la première série de conducteurs électriques (9) susdite et la deuxième série de conducteurs électriques (10), pendant un premier intervalle de temps prédéterminé, et d'autre part, un champ d'attraction se crée entre la première série de conducteurs électriques (9) susdite et la deuxième série de conducteurs électriques (10), pendant un deuxième intervalle de temps prédéterminé.

6. Dispositif selon la revendication 5, dans lequel ladite première série de conducteurs électriques (9) et/ou ladite deuxième série de conducteurs électriques (10) comprend un tracé d'encre conductrice.

7. Dispositif selon l'une des revendications 1 à 4, dans lequel ledit système d'entrainement comprend un premier corps susceptible d'être aimanté (14) disposé sur la lentille optique (2), en particulier un électroaimant, un deuxième corps aimanté (13), disposé sur ledit imprimé interlacé (1) et une source d'énergie électrique (15) permettant de faire passer périodiquement un courant dans ledit premier corps susceptible d'être aimanté (14), en particulier dans l'électroaimant et de générer un champ magnétique au sein de ce dernier pendant un intervalle de temps prédéterminé.

8. Dispositif selon l'une quelconque des revendications 1 à 4 dans lequel ledit système d'entraînement comprend un moteur et un engrenage réducteur dont un arbre entraîne une came (16), laquelle came (16)entraîne un suiveur de came (17) qui est prévu pour être d'une part en contact avec ladite came (16) et d'autre part relié au dit imprimé interlacé (1).

9. Dispositif selon l'une quelconque des revendications précédentes, comprenant en outre un premier support placé contre ladite deuxième face de l'imprimé interlacé (1).

10. Dispositif selon la revendication 9, dans lequel ledit premier support est solidaire de l'imprimé interlacé et comporte lesdits moyens de transmission.

11. Dispositif selon l'une des revendications précédentes comprenant en outre des rainures de guidages dans ou sur ladite lentille optique, agencées pour guider ledit mouvement de translation dudit imprimé interlacé.

12. Dispositif selon l'une quelconque des revendications précédentes, comprenant en outre des moyens d'ajustement mutuel (27,28,29) de position entre ladite au moins une lentille optique (2) et ledit au moins un imprimé interlacé (1).

13. Utilisation du dispositif selon l'une quelconque des revendications 1 à 12 comme dispositif d'affichage jetable.
